## Europäisches Patentamt

## European Patent Office

## Office européen des brevets

(19)

(11) Veröffentlichungsnummer: **0 212 719**
**A2**

(12) # EUROPÄISCHE PATENTANMELDUNG

(21) Anmeldenummer: **86201303.4**

(22) Anmeldetag: **23.07.86**

(51) Int. Cl.⁴: **H02K 7/06** , **B26B 19/28** , **A61H 1/00**

(30) Priorität: **06.08.85 DE 3528114**
**29.03.86 DE 3610770**

(43) Veröffentlichungstag der Anmeldung:
**04.03.87 Patentblatt 87/10**

(84) Benannte Vertragsstaaten:
**AT DE FR GB**

(71) Anmelder: **Philips Patentverwaltung GmbH**
**Billstrasse 80**
**D-2000 Hamburg 28(DE)**
Anmelder: **N.V. Philips' Gloeilampenfabrieken**
**Groenewoudseweg 1**
**NL-5621 BA Eindhoven(NL)**

(72) Erfinder: **Bertram, Leo**
**Am Sender 10**
**D-5190 Stolberg(DE)**
Erfinder: **Schemmann, Hugo, Dr.**
**Zwartebergweg 6**
**NL-6371 XD Schaesberg(NL)**
Erfinder: **Bukoschek, Romuald Leander**
**Dr.-Palla-Gasse 28**
**A-9020 Klagenfurt(AT)**

(74) Vertreter: **Kupfermann, Fritz-Joachim et al**
**Philips Patentverwaltung GmbH Billstrasse**
**80 Postfach 10 51 49**
**D-2000 Hamburg 28(DE)**

(54) **Antriebsvorrichtung für ein Haushalts-Vibrationsgerät.**

(57) Die Erfindung bezieht sich auf eine Antriebsvorrichtung für ein Haushalts-Vibrationsgerät, wie Trockenrasier-oder Massageapparat, bei dem die Läuferwelle (19) eines Einphasensynchronmotors ein Nocken-Abtastrollengetriebe antreibt, das die Motordrehbewegung in eine Vibrationsbewegung umwandelt, wobei der Rotor des Motors eine Hauptfeldrichtung (22) und der Stator eine Hauptfeldrichtung (16) haben. Die Längsachse des spiegelsymmetrischen Nockens ist unter einem Winkel zur Hauptfeldrichtung (22) des Rotors angebracht. Es sind den Nocken (21) abtastende Abtastrollen (31, 31a) an einem Antriebsende (27, 27a) eines um einen Mittelbereich verkippbaren Schwenkarmes (25) und ein zu bewegendes Vibrationsteil (39) am Abtriebsende (35) dieses Schwenkarmes angeordnet. Die Abtastrollen (31, 31a) rollen in ständigem Kontakt auf der Kontur des Nockens (21) ab. Am Ende des mit Spiel behafteten Übertragungsweges wirkt auf das Vibrationsteil (39) eine Feder (38) ein, die eine der Abtastrollen (31, 31a) gegen den Nocken (21) drückt, wobei die Position des Nockens (21) relativ zur Magnetisierungsrichtung (22) des Rotors derart verdreht wird, daß der Rotor bei Parallelstand von Rotormagnetisierungsrichtung (22) und Statorhauptfeldrichtung (16) mittels der Feder (38), vorzugsweise in positiver Richtung, aus dem Parallelstand herausgedrückt wird. Weiterhin befindet sich das Vibrationsteil (39) bei diesem Parallelstand in der Nähe seines Umkehrpunktes. Zur weiteren Geräuschverbesserung ist eine Rücklaufsperre vorgesehen.

FIG.1

## Antriebsvorrichtung für ein Haushalts-Vibrationsgerät

Die Erfindung bezieht sich auf eine Antriebsvorrichtung für ein Haushalts-Vibrationsgerät, wie Trockenrasier-oder Massageapparat, bei dem die Läuferwelle eines Einphasensynchronmotors ein Nocken-Abtastrollengetriebe antreibt, das die Motordrehbewegung in eine Vibrationsbewegung umwandelt, wobei der Rotor des Motors eine Hauptmagnetisierungsrichtung und der Stator eine Hauptfeldrichtung hat und die Längsachse des spiegelsymmetrischen Nockens unter einem Winkel zur Hauptmagnetisierungsrichtung des Rotors angebracht ist und wobei Nocken abtastende Abtastrollen an einem Antriebsende eines um einen Mittelbereich verkippbaren Schwenkarmes und ein zu bewegendes Vibrationsteil am Abtriebsende dieses Schwenkarmes angeordnet sind und die Abtastrollen in ständigem Kontakt auf der Kontur des Nockens abrollen.

Aus der DE-OS 25 13 007 ist eine Starthilfevorrichtung für einen Einphasensynchronmotor bekannt, bei der gegen den einen Nocken aus entgegengesetzten Richtungen Andruckrollen gedrückt werden, die auf Schiebern gegeneinander und voneinander weg verschieblich sind. Diese Vorrichtung stellt eine zusätzliche Anlaufhilfe dar und hat mit dem eigentlichen Betrieb nichts zu tun. Mittels der federbelasteten Druckrollen verdreht der Nocken nach dem Entregen des Stators auch bei großen Reibungswerten den Rotor eines Einphasensynchronmotors so, daß ein Anlauf immer gewährleistet ist oder, anders ausgedrückt, daß die Hauptmagnetisierungsrichtung des Rotors aus der Hauptstatorfeldrichtung so verdreht wird, daß beide Richtungen einen Winkel miteinander einschließen. Würden beide Feldrichtungen zusammenfallen, dann wäre ein Anlauf des Motors nicht möglich.

Aus der EP-OS 45 107 ist es für Vibrationstrockenrasierer bekannt, diese mit Hilfe von Rotationsmotoren anzutreiben. Auf der Rotorwelle sind dabei senkrecht zueinander zwei Nockenscheiben angeordnet, die jede von einer Rolle abgetastet werden und die über ein Hebelgelenksystem das Untermesser des Trockenrasierers antreiben. Dieses Hebelgelenksystem ist anfällig, weil es mit Filmgelenken zwischen den einzelnen Gelenkteilen gebildet ist. Zwei übereinander auf der Motorwelle angeordnete Nocken vergrößern zudem die Bauhöhe, was dem Wunsch nach einem möglichst flachen Gerät entgegensteht. Bei einer anderen Ausbildung mit einem rotierenden Motor und einem Kurbeltrieb werden störende Geräusche verursacht.

Aus der EP-OS 45 107 ist weiterhin ein Nockenmechanismus bekannt, bei dem der Nocken die Form eines gleichseitigen Dreiecks mit drei in gleicher Weise konvex gekrümmten Seiten hat, wobei die Schwingbewegung am Umfang des Nockens abgenommen wird. Die Abnahme erfolgt mit Hilfe eines U-förmigen Joches mit parallelen Schenkeln, welche den Nocken beidseitig umfassen. Das Profil des Nockens hat die Eigenschaft, daß der Abstand zwischen zwei beliebigen parallelen Linien, die das Profil tangieren, konstant ist. Die Vorrichtung ist als sogenanntes Gleichdick bekannt. Auf diese Art wird beim Drehen des Nockens innerhalb der parallelen Flanken des U-förmigen Joches der Kontakt von Nocken und Joch ständig aufrecht erhalten. Es hat sich gezeigt, daß bei diesem Gleickdick-Antrieb Toleranzprobleme, Klemmung und Lärm beträchtliche Schwierigkeiten bereiten. Das gleiche gilt für einen Doppelkontaktmechanismus, wie er in der US-PS 27 41 132 beschrieben ist.

Weiterhin ist es aus der französischen Patentschrift 872 634 bekannt, bei einer Werkzeugmaschine mit einem Nockenabtastsystem, den den Nocken abtastenden Schwingarm mittels einer Feder gegen den Nocken zu drücken. Aufgabe der Feder ist es dabei, den ständigen Kontakt zwischen Schwenkarm und Nocken auch unter dynamischen Bedingungen aufrecht zu erhalten. Eine entsprechende Konstruktion für Vibrationsgeräte mit Synchronmotorantrieb ist aus der deutschen Patentanmeldung P 34 04 297.0 (PHD 84-022) bekannt. Die dabei verwendete Feder hat die Aufgabe, den Kontakt zwischen dem Nocken und einer Rolle auch unter dynamischen Bedingungen ständig aufrecht zu erhalten und darüberhinaus den Rotor in der Ruhestellung so zu verdrehen, daß die Hauptmagnetisierungsrichtung des Rotors aus der Hauptstatorfeldrichtung verdreht wird. Diese Anordnung hat bei Vibrationsgeräten den Nachteil, daß wegen der zur Aufrechterhaltung des Kontaktes zwischen Rolle und Nocken erforderlichen großen Federkraft die Reibungsverluste im Schwingsystem sehr groß sind. Ein Teil der Motorkraft wird durch diese Reibungsverluste verbraucht.

Es hat sich weiterhin gezeigt, daß derartige Schwingsysteme störende Geräusche entwickeln. Diese Geräusche entstehen zu einem beträchtlichen Teil durch die im Übertragungsweg liegenden mechanischen Spiele. Diese zum Teil notwendigen Spiele führen zu unkontrollierten Bewegungen des Untermessers mit entsprechenden Geräuschen.

Es ist bekannt, Geräusche durch spielfreie Konstruktionen zu bekämpfen. Dies wäre zum Beispiel möglich durch eine klammernde Umfassung des Schwingarmhebels mittels der am Untermesser angebrachten Gabel. Auch bei der Konstruktion nach der französischen Patentschrift 872 634 bewirkt die dort vorgesehene Anpreßfeder eine Spielbeseitigung.

Schließlich ist in der deutschen Patentanmeldung P 34 04 299 eine Vorrichtung beschrieben mit zwei an einem Schwenkarm angeordneten Rollen, die auf einen von einem Synchronmotor angetriebenen, spiegelbildlich ausgebildeten Nocken arbeiten.

Bei einer derartigen Ausbildung ist keine Feder zur Aufrechterhaltung des Kontaktes zwischen Rollen und Nocken erforderlich. Entsprechend sind die Verluste im Schwingsystem geringer. Allerdings sind dabei die Start-und Geräuschprobleme nicht beseitigt.

Es ist Aufgabe der Erfindung, eine Antriebsvorrichtung der eingangs erwähnten Art mit zwei Rollen und einem Nocken zu schaffen, bei der auf einfache konstruktive Art die Starthilfe gewährleistet ist bei gleichzeitiger Geräuschunterdrückung.

Die gestellte Aufgabe ist dadurch gelöst, daß am Ende des mit Spiel behafteten Übertragungsweges auf das Vibrationsteil eine Ausgleichsfeder einwirkt, die eine der Abtastrollen gegen den Nocken drückt, wobei die Position des Nockens relativ zur Magnetisierungsrichtung des Rotors derart verdreht ist, daß der Rotor bei Parallelstand von Rotormagnetisierungsrichtung und der Statorhauptfeldrichtung mittel der Feder aus dem Parallelstand herausgedrückt wird, und weiterhin das Vibrationsteil sich bei diesem Parallelstand in der Nähe eines Umkehrpunktes befindet. Vorzugsweise soll die Feder den Rotor in positiver Richtung aus dem Parallelstand verdrehen. Die positive Drehrichtung ist dabei diejenige, in welcher das vom Statorstrom auf den Rotor ausgeübte Moment gleich Null wird, bevor das magnetische Klebemoment bei stromlosen Statorspulen gleich Null ist und zu einer stabilen Ruhelage führt. In diesem Fall wird im Parallelstand die Federwirkung durch das Klebemoment unterstützt und die Feder kann - schwächer ausgelegt werden.

Durch das Wegfallen der die Rollen zur Aufrechterhaltung des Kontaktes gegen den Nocken drückenden Anpreßfeder kann die volle Motorleistung zum Antrieb des Vibrationsteiles eingesetzt werden. Die auf das Vibrationsteil einwirkende Feder verbessert das Startverhalten des Motors, weil sie den Rotor aus der Parallelstellung von Rotormagnetisierungsrichtung und Statorhauptfeldrichtung herausdrückt. Schließlich wird durch die Feder ein Spielausgleich herbeigeführt, so daß die Geräusche stark vermindert werden.

Nach einer weiteren Ausgestaltung der Erfindung ist vorgesehen, daß die Anpreßkraft der Ausgleichsfeder so bemessen ist, daß sie gerade in der Lage ist, den Rotor bei der durch das Schwingsystem verursachten Reibungsbelastung aus dem Parallelstand von Rotormagnetisierung und Statorhauptfeldrichtung, vorzugsweise in positiver Richtung, zu verdrehen. Die Feder kann damit relativ schwach bemessen sein, so daß sie die mechanischen Verluste des Schwinghebelsystems gering hält.

Nach einer weiteren Ausgestaltung der Erfindung ist vorgesehen, daß die Oberflächen der Abtastrollen elastisch ausgebildet sind. Günstigerweise werden die Rollenoberflächen dabei aus einem gummiartigen Material bestehen. Die elastische Ausbildung führt zu einem Toleranzausgleich und zu einer Bewegungsberuhigung.

Bei den mittels Einphasensynchronmotoren angetriebenen Geräten ist mehr oder weniger bemerkbar, daß das Betriebsgeräusch abhängig ist von der Drehrichtung des Motors. Zum Teil ist lediglich die Klangfarbe des Geräusches anders. Es gibt aber auch Fälle, in denen das Geräusch in der einen Drehrichtung wesentlich lauter und unangenehmer ist als in der anderen. Hierduch kann der Benutzer verunsichert oder gestört werden, was ihn zu einer negativen Beurteilung oder sogar völligen Ablehnung des Gerätes verleitet.

Die unterschiedlichen Geräusche können von einem von der Drehrichtung abhängigen Bewegungsverhalten des Motors abhängig sein. Unsymmetrien sind dabei vor allem bei der Umwandlung von Drehbewegungen in Schwingbewegungen zu beobachten.

Nach einer weiteren, in Kombination mit der Ausgleichsfeder günstigen Ausgestaltung der Erfindung ist deshalb vorgesehen, daß der Übertragungsweg zwischen Vibrationsteil und Nocken eine Rücklaufsperre aufweist und daß der Motor mittels dieser Rücklaufsperre gezwungen wird, in der Richtung zu drehen, in der das günstigere Betriebsgeräusch und/oder weniger Vibrationen auftreten.

Der Motor läuft damit immer in der für das Geräusch und die Vibrationen günstigen Drehrichtung an, und der Benutzer hat damit stets den gleichen Geräuscheindruck und die gleichen Gesamtwahrnehmungen des Betriebsverhaltens. Der Benutzer wird nicht mehr verunsichert hinsichtlich der Qualität des Gerätes.

Nach einer weiteren Ausgestaltung der Erfindung ist vorgesehen, daß der Einphasensynchronmotor mit seinem Übertragungsweg zur Last so ausgebildet ist, daß das günstigere Betriebsgeräusch in der Drehrichtung auftritt, in welcher das vom Statorstrom auf den Rotor ausgeübte Moment gleich Null wird, bevor das magnetische Klebemoment bei stromlosen Statorspulen gleich Null ist und zu einer stabilen Ruhelage führt, und daß der Rotor mittels einer Rücklaufsperre gezwungen wird, in dieser positiven Richtung zu drehen.

Durch die Bevorzugung der günstigen Drehrichtung und das Sperren der entgegengesetzten Drehrichtung läßt sich ein einheitliches angenehmes Arbeitsgeräusch erzielen, das insbesondere auch angenehmer ist gegenüber den Vibrationen und Geräuschen, die ein Schwingankerantrieb erzeugt. Auch das Startgeräusch wird verbessert.

An sich sind mechanische Rücklaufsperren z. B. aus der GB-PS 419 767 bekannt. Bei dieser Rücklaufsperre erfährt ein reibungsgekoppelter, am Gehäuse drehbar gelagerter Sperrhebel eine von der Drehrichtung des Motors abhängig radiale Auslenkung, die den Hebel gegen eine Blockiernase führt oder davon wegdrückt und so in der unerwünschten Drehrichtung zu einer direkten Sperrung des Rotors führt. Eine derartige Anordnung wäre an sich zum Blockieren der unerwünschten Drehrichtung einsetzbar. Das Startgeräusch ist aber, wenn der Motor das Bestreben hat, in der unerwünschten Drehrichtung anzulaufen, wegen der direkten Sperrung nicht angenehm.

Nach einer weiteren Ausgestaltung der Erfindung ist deshalb vorgesehen, daß bei der genannten Antriebsvorrichtung mit zwei Rollen und einem Nocken die Rücklaufsperre aus einem federnden Sperrelement besteht, das gegen eine Stirnfläche einer der Abtastrollen drückt, wobei an der jeweiligen Abtastrolle eine Blockiernase vorgesehen ist, gegen die ein Sperrhaken bei der unerwünschten Drehrichtung anschlägt und den Motor damit indirekt sperrt. Im einzelnen ist dabei nach einer weiteren Ausgestaltung der Erfindung vorgesehen, daß das Sperrelement ein Kunststoffspritzteil ist, das an dem verkippbaren Schwenkarm festgelegt ist, der die Abtastrolle lagert, und daß das Kunststoffspritzteil zwischen der Festlegestelle am Hebelarm und einem gegen die Stirnfläche der Abtastrolle gedrückten Sperrhaken als Kunststoffeder ausgelegt ist, wobei der Sperrhaken mit einer Vertiefung in der Stirnfläche der Abtastrolle zusammenwirkt. Die Vertiefung ist dabei so ausgebildet, daß der Sperrhaken bei gewünschter Drehrichtung der Abtastrolle aus der Vertiefung frei herausläuft und bei nicht gewünschter Drehrichtung gegen die Blockiernase anschlägt.

Das sperrbare Abtastrad ist dabei zwar ein Glied in der Kette der Übertragungsglieder, überträgt aber selbst durch Drehung keine Kräfte auf das Abtriebsteil, sondern die Drehbarkeit sorgt nur für das leichte Abrollen des Nockens auf dem Kurvenabtaster bzw. Schwenkarm. Die Sperrwirkung der Rücklaufsperre wirkt seitlich des eigentlichen Kraftübertragungsweges und wirkt damit durch Reibungserhöhung und nicht direkt formschlüssig weich auf den Einphasensynchronmotor und verursacht wenig Geräusche.

Nach einer weiteren Ausgestaltung der Erfindung ist vorgesehen, daß die Mittellinie des Motorstatorpaketes zusammenfällt mit der Mittellinie des Abtriebsarmes des Schwenkarmes bei Mittenstellung der Vibrationsteile. Dieser Aufbau führt zu einem besonders schmalen handlichen Gerät.

Nach einer weiteren Ausgestaltung der Erfindung is vorgesehen, daß

- die von der ersten Rolle dem Schwenkarm aufgezwungene Bewegung gegenüber der von der zweiten Rolle dem Schwenkarm aufgezwungenen Bewegung räumlich um $\alpha_0 = 360°/2n$ Verdrehungsgrade des Nockens oder einem ungeraden Vielfachen davon versetzt von dem Nocken abgenommen wird, wobei n die Frequenzvervielfachung der Schwingfrequenz von Rollen und Vibrationsteil gegenüber der Nockenumdrehungsfrequenz ist,

- die beim Abtasten dem Schwenkarm von den Rollen aufgezwungene Auslenkbewegung bei beiden Rollen die gleiche Abhängigkeit vom Verdrehungswinkel $\alpha$ des Nockens hat,

- die Dimensionierung des Nockens derart gewählt ist, daß unter Berücksichtigung von Rollendurchmesser, Schwingungsamplitude, Schwingungsverlauf und dem mittleren Abstand Nockenachse - Rollenachse die Rollen eine vom Nockendrehwinkel $\alpha$ abhängige, periodische Auslenkung ($x_1$ bzw. $x_2$) erfahren, wobei die Grundfrequenz der Schwingbewegung n-fach so groß ist wie die Umdrehungsfrequenz des Nockens und als Symmetriebedingung für die Auslenkungen gilt:

$x_1 = -x_2$,

mit $x_1 = f(\alpha)$,

$x_2 = f(\alpha \pm \alpha_0)$

und

$$\alpha_0 = \frac{360^\circ}{2n} \cdot (2\mu + 1) \qquad \mu = 0,1,2,\ldots$$

wobei n Werte von vorzugsweise 2, 4, 8 annimmt und $\alpha_0$ der Versatzwinkel der beiden Abtastrollen 31, 31a ist.

Bei dieser Antriebsvorrichtung sorgen allein die Rollen für das ständige Aufrechterhalten des Kontaktes zwischen Nocken und Rollen, da ein Kontaktverlust der einen Rolle jeweils von der anderen Rolle verhindert wird.

Nach einer weiteren Ausgestaltung der Erfindung ist vorgesehen, daß

-beide Rollen den gleichen Durchmesser aufweisen,

-bei Mittenstellung der Rollen der Abstand der beiden Rollenachsen von der Nockenachse gleich groß ist,

-bei Mittenstellung der Rollen die Verbindungslinien der beiden Rollenachsen zur Nockenachse einen räumlichen Winkel von $\alpha_0 = 360^\circ/2n$ oder ein ungerades Vielfaches $(2\mu + 1)$ davon miteinander bilden, wobei n die Frequenzvervielfachung ist.

Nach einer weiteren Ausgestaltung der Erfindung ist die Verbindung zwischen dem Schwenkarm und der Achse einer der beiden oder beider Rollen elastisch ausgebildet, wobei bevorzugt die Schwingebene von Schwingarm und Rollen zusammenfallen. Damit lassen sich die Laufgeräusche noch weiter absenken.

Nach einer weiteren Ausgestaltung der Erfindung ist vorgesehen, daß bei einem Versatzwinkel von $\alpha_0 \neq 180^\circ$ die Verbindungslinie zwischen Schwenkmittelpunkt und Rollenmittelpunkt und die Verbindungslinien zwischen Rollenmittelpunkt und Nockenachse senkrecht aufeinander stehen. Die Schwenkbahn des Rollenmittelpunktes weicht in diesem Fall nur wenig von einer linear oszillierenden Bahn ab.

Die Erfindung wird anhand des in der Zeichnung dargestellten Ausführungsbeispieles näher erläutert. Es zeigen:

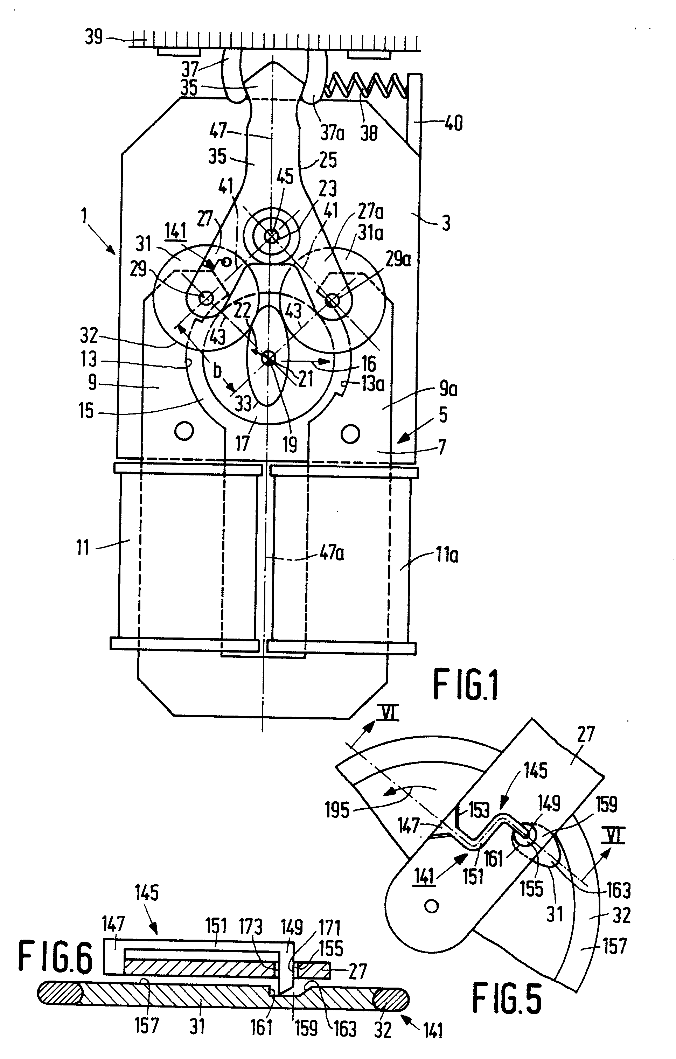

Fig. 1 die Funktionsansicht eines Vibratorrasierapparates mit einem Einphasensynchronmotor als Antriebsmotor und einem Nocken-Abtastrollengetriebe mit einem umlaufenden Nocken und zwei den Nocken abtastenden Abtastrollen in Mittelstellung, wobei eine Ausgleichsfeder vorgesehen ist, die in Bewegungsrichtung des Vibrationsteiles gegen einen der Greifarme drückt, die mit dem Schwenkarm in Kontakt sind, und wobei weiterhin eine Rücklaufsperre vorgesehen ist, die auf eine der Abtastrollen einwirkt.

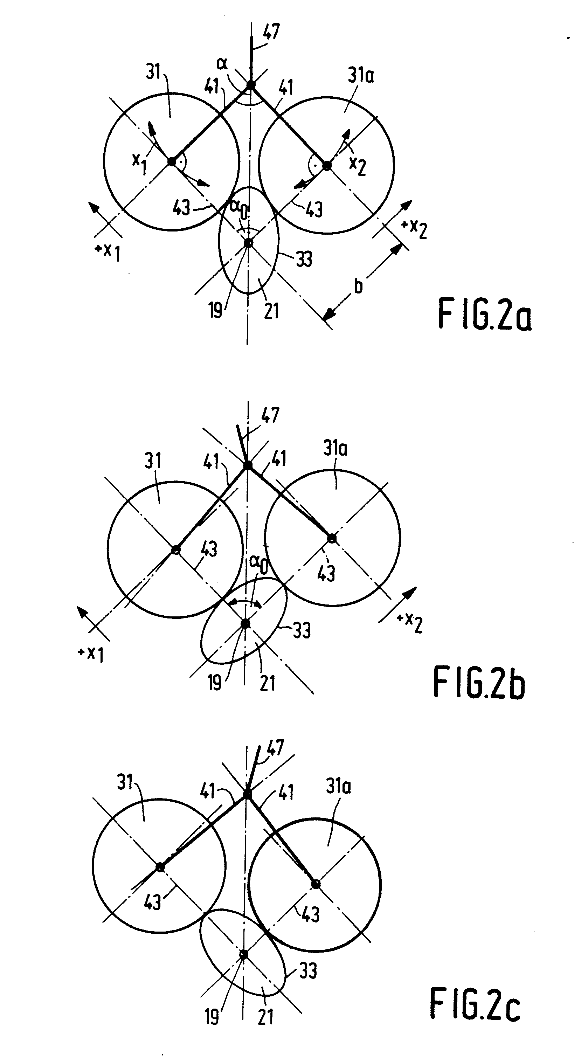

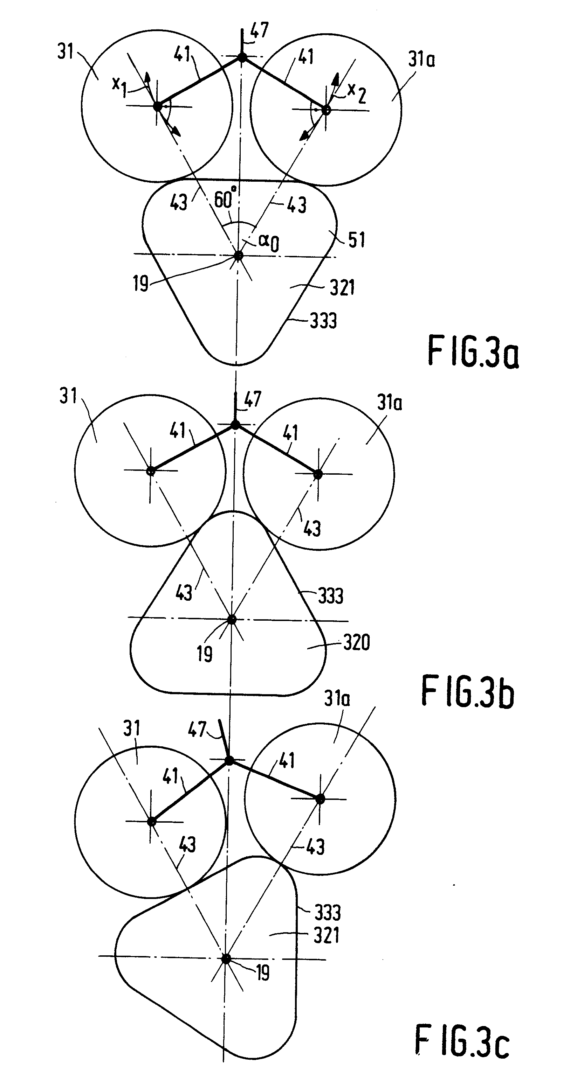

Fig. 2a bis c drei verschiedene Nockenstellungen gegenüber den Abtastrollen bei dem Getriebe nach Fig. 1 mit einem länglichen, etwa ellipsenförmigen Nocken (n = 2), wobei Fig. 2a das System in Mittenstellung zeigt, Fig. 2b die linke Endposition und Fig. 2c die rechte Endposition, Fig. 3a bis c das Getriebe nach Fig. 1 mit einem etwa dreieckigen Nocken (n = 3) bei drei verschiedenen Nockenstellungen, Fig. 3a und 3b Mittenstellung, 3c linke Endposition,

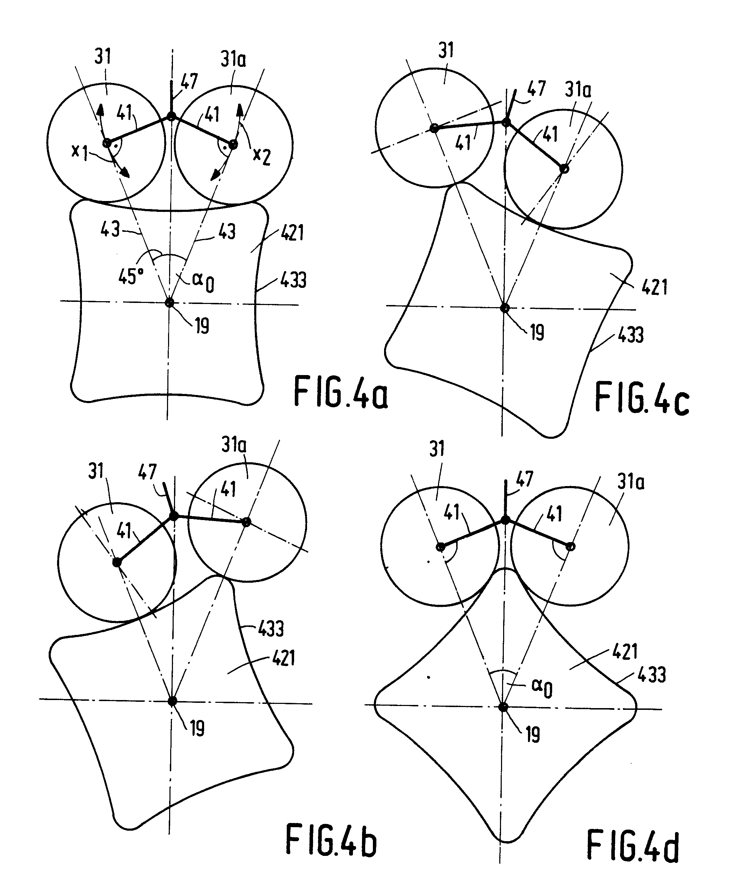

Fig. 4a bis d das Getriebe nach Fig. 1 mit einem etwa viereckigen Nocken (n = 4); es sind vier verschiedene Nockenpositionen (a - d) dargestellt, Fig. 4a und 4d Mittenstellung, Fig. 4b linke Endposition, Fig. 4 c rechte Endposition; die Nocken sollen im übrigen die obigen Symmetriebedingungen erfüllen,

Fig. 5 und 6 die Rücklaufsperre vergrößert in Ansicht und Schnitt längs der Linie V-V.

Bei der in Fig. 1 dargestellten Funktionsansicht eines Vibratorrasierapparates 1 ist an einer Grundplatte 3 ein Einphasensynchronmotor 5 befestigt. Der Einphasensynchron motor hat ein U-förmiges Blechpaket 7 mit zwei Schenkeln 9 und 9a. Auf die Schenkel 9 und 9a sind Erregerspulen 11 und 11a aufgeschoben. An den freien Enden der Eisenschenkel 9, 9a bilden sich Polschuhe 13, 13a aus unter Bildung einer Statorbohrung 15. Die Hauptfeldrichtung des Stators ist mit 16 angegeben. In der Statorbohrung 15 läuft ein dauermagnetischer Läufer 17 um, auf dessen Welle 19 ein Nocken 21 angeordnet ist. Der Nocken 21 hat bei der Darstellung nach Fig. 1 eine längliche, etwa ellipsenförmige, spiegelsymmetrische Form. Die Magnetisierungsrichtung des Rotors 17 ist mit 22 angegeben.

Auf der Grundplatte 3 ist eine Achse 23 befestigt, auf der ein Schwenkarm 25 schwenkbar gelagert ist. Der Schwenkarm 25 teilt sich antriebsseitig in zwei Teilarme 27, 27a auf. An den freien Enden der Antriebsteilarme sind mittels Achsen 29, 29a Abtastrollen 31, 31a gelagert. Die Abtastrollen 31 und 31a tasten die Kontur 33 des Nockens 21 durch ständiges Anliegen ab. Am abtriebsseitigen Ende 35 des Hebelarmes 25 greifen Gabelarme 37, 37a eines Messerblockes 39 an. Gegen einen der Gabelarme 37, 37a drückt eine Ausgleichsfeder 38 die sich am Gehäuse des Gerätes, angedeutet durch das Gegenlager 40, abstützt. Auf nicht näher dargestellte Weise können beide Antriebsteilarme 27 und 27a oder nur einer von beiden elastisch ausgebildet sein. Es ist auch möglich, die Lagerungen im Bereich der Achsen 29 und 29a elastisch auszubilden oder die Mantelfläche einer oder beider Rollen 31, 31a mit einem elastischen Belag 32 zu versehen, um so einen gewissen Ausgleich zur Vermeidung von Verklemmungen herbeizuführen.

Bei der Ausführungsform nach Fig. 1 schließen die Verbindungslinien 43 zwischen der Motor/Nockenachse 19 und den Rollenachsen 29, 29a in der gezeichneten Mittenstellung einen Winkel $\alpha_0$ miteinander ein, der 90° beträgt. Die rechtwinkelige Gestaltung ergibt sich mit

$$\alpha_0 = 360° \quad \frac{2\mu + 1}{2n}$$

für $n = 2$ und $\mu = 0$ (Frequenzverdoppelung).

Von dem Versatzwinkel $\alpha_0$ hängt die Phasenverschiebung der Auslenkungen $x_1$ und $x_2$ - (Fig. 2a) ab. Für die erfindungsgemäße Funktion ist wichtig, daß

$x_1$ immer gleich $-x_2$ ist,

wobei $x_1 = f(\alpha)$ und $x_2 = f(\alpha \pm \alpha_0)$ ist.

In den Fig. 1 und 2a bis c ist: $n = 2$ und $\mu = 0$.

Mit $x_1 = \sin 2\alpha$ und $\alpha_0 = 90°$ erhält man:

$x_2 = \sin 2 (\alpha + 90°) = -\sin 2\alpha$.

Demnach $x_2 = -x_1$,

Entsprechend ist in Fig. 3a bis c: $n = 3$ und $\mu = 0$.

Mit $x_1 = \sin 3\alpha$ und $\alpha_0 = 60°$ erhält man:

$x_2 = \sin 3 (\alpha + 60°) = -\sin 3\alpha$.

Demnach $x_2 = -x_1$,

Entsprechend ist in Fig. 4a bis d: $n = 4$ und $\mu = 0$.

Mit $x_1 = \sin 4\alpha$ und $\alpha_0 = 45°$ erhält man:

$x_2 = \sin 4 (\alpha + 45°) = -\sin 4\alpha$.

Demnach $x_2 = -x_1$

Die genannten Abhängigkeiten $x_1$ und $x_2$ können auch Harmonische höherer Frequenzen als die Grundschwingfrequenz enthalten, solange die oben genannte Symmetriebedingung erfüllt ist. Da die Bewegung, die den Rollen 31, 31a vom Nocken 21 aufgezwungen wird, ursprünglich ausgehend von der Mittenstellung der Rollen 31, 31a, von einer linear oszillierenden Bewegung in Richtung der Verbindungslinien 43 von Nocken-und Rollenachse ausgeht, ist vorzugsweise der Mittelpunkt 45 der Schwenkachse 23 des Schwenkarmes 25 der Mittelpunkt eines Kreises, der die beiden Rollenachsen 29, 29a bei der Mittenstellung der Rollen 31, 31a in etwa tangiert. Diese Kreisbahn sollte sich möglichst eng an die ursprünglich linear oszillierende Rollenbahn anschmiegen. Hierzu ist es vorteilhaft, wenn die Schwenkarmachse 23 bzw. die Mittellinie 47 des Abtriebsteils des Schwenkarmes und die Mittellinie 47a des Motorblechpaketes die Winkelhalbierende zwischen den Verbindungslinien 43 von Rollenachse 29, 29a und Nockenachse 19 bildet, wobei diese Mittellinie 47 durch die Nockenachse 19 verläuft. Bei Mittenstand des Schwenkarmes 25 sollen die Verbindungslinien 41 zwischen Schwenkarmachse 23 und Rollenachsen 29, 29a und die Verbindungslinien 43 zwischen Nockenachse 19 und den Rollenachsen 29, 29a vorzugsweise senkrecht aufeinander stehen. Abweichungen von der linearen Bahn führen zu Verzerrungen. Es ist möglich, diese bei der Festlegung der Nockenkontur zu berücksichtigen und aufzufangen. Eine andere Möglichkeit, zu einer gleichzeitigen gleichmäßigen Anlage der Rollen an dem Nocken zu kommen, besteht darin, daß die Abweichungen von der idealen linearen Bahn in positiver und negativer Richtung gleich groß sind. Toleranzen und Restlärm lassen sich durch im Ganzen oder an der Oberfläche elastische Rollen bekämpfen. Von Vorteil ist es dabei, wenn einer oder beide Antriebsteilarme 27, 27a elastisch sind und mit leichtem Druck für eine geringe Anpreßkraft an dem Nocken 21 sorgen.

Es ist auch möglich, die Schwenkhebel nicht starr miteinander zu koppeln, sondern sie getrennt auf der Schwenkachse 23 zu lagern und mit Hilfe einer stark progressiven Spannfeder zwischen den Antriebsteilarmen 27, 27a für den Kontakt zwischen den Rollen 31, 31a und dem Nocken 21 zu sorgen.

Die richtige Nockenkontur 33, die die obigen Symmetriebedingungen erfüllt, ist eine Voraussetzung für ein Funktionieren der Antriebsvorrichtung. Die Nockenkontur 33 läßt sich wie folgt bestimmen:

Vorausgesetzt werden:

1. Der Rollendurchmesser = $R_0$

2. Der mittlere Abstand von Nockenachse 19 und Rollenachsen 29, 29a gleich b.

3. Die Abhängigkeit der Rollenauslenkung von der Nockenverdrehung $x = f(\alpha)$, wobei die Symmetriebedingung $x_1 = -x_2$ derart erfüllt sein

muß, daß die Auslenkung sich mit umgekehrten Vorzeichen nach einer halben Periode wiederholt, wobei die Abhängigkeit also nur ungeradzahlige Oberwellen enthält.

Man schlägt also um die Nockenachse 19 einen Kreis, dessen Radius gleich dem mittleren Abstand b von Nockenachse 19 und Rollenachsen 29, 29a ist. Über dem Umfang dieses Kreises trägt man in radialer Richtung die zu den jeweiligen Winkeln gehörenden positiven und negativen Auslenkungen gemäß der Bedingung $x = f(\alpha)$ auf. Die entsprechenden Radien werden dabei um den zu dem jeweiligen Winkel gehörenden Betrag der Auslenkung verlängert oder verkürzt. Um die sich auf diese Weise ergebende Bahnkurve schlägt man in dichter Folge Kreise, deren Radius gleich dem Rollenradius ist. Diese schneiden aus dem ursprünglichen, um die Nockenachse geschlagenen Kreis Teile heraus. Nach völliger Umrundung der Bahnkurve bleibt die gewünschte Nockenkontur stehen. Vorzugsweise sollte die Auslenkung sinusförmig vom Verdrehungwinkel abhängen

$$x = a \sin n\alpha,$$

wobei a die Amplitude der Rollenauslenkung ist, die unter Berücksichtigung der von der Konstruktion abhängenden Hebelverhältnisse auch die Amplitude der Schwingbewegung des Messers bestimmt.

Der in Fig. 3 dargestellte Fall mit $n = 3$, $\mu = 0$ führt auf einen Verdrehungswinkel $\alpha_0$ der Rollenachse von 60°. Der in der Zeichnung nicht dargestellte Fall $n = 3$, $\mu = 1$ führt bei gleicher Nockenkontur auf einen Winkel $\alpha_0$ von 180°. Diese Anordnung mit einem etwa dreieckförmigen Nocken erinnert auf den ersten Blick an einen Gleichdick-Antrieb mit dreieckförmigem, konvex gekrümmtem Nocken. Der Unterschied zu einem Gleichdick-Nocken besteht aber darin, daß die Dreiecksspitzen stark ausgerundet sind. Auch erfüllt die Gleichdick-Kontur im allgemeinen nicht die erforderliche Symmetriebedingung, wonach die Abhängigkeit der Auslenkung von der Verdrehung nur ungeradzahlige Oberwellen der Grundfrequenz der Auslenkungsperiode enthält. Zudem sind die Tangenten des Rollenantriebes an den Berührungspunkten nur in wenigen Stellungen parallel, und der Abstand zwischen den Berührungspunkten der Rollen am Nockenumfang 333 ist nicht konstant.

Es zeigt sich, daß bei Einhaltung der Symmetriebedingung $x_2 = -x_1$ die Abtastrollen 31, 31a sowohl bei beiden möglichen Mittenstellungen (Fig. 3a und 3b) des Schwenkarmes 25 als auch bei Auslenkung des Schwenkarmes 25 aus der Mittenlinie sicher an der Oberfläche 333 des dreieckförmigen Nockens 321 anliegen.

Bei dem Ausführungsbeispiel nach Fig. 4 mit $n = 4$ und $\mu = 0$ ergibt sich ein etwa viereckiger Nocken 421. Der Versatzwinkel $_0$ der Rollen 31, 31a beträgt dann bei $\mu = 0$ 45°. Fig. 4a zeigt, daß in diesem Fall die Linien 41 zwischen Schwenkmittelpunkt 45 und Rollenmittelpunkt 29 und die Verbindungslinien 43 zwischen Rollenmittelpunkt 29 und Nockenachse 19 bei Mittenstellung der Anordnung senkrecht aufeinander stehen. Die Rollen 31, 31a liegen sowohl bei der Mittenstellung des Schwenkarmes 25 (Fig. 4a und 4d) als auch bei davon abweichenden Schwenkstellungen (Fig. 4b und 4c) sicher in der Oberfläche 433 des viereckigen Nockens an. Die hier erzielbare Frequenzvervierfachung kann in sehr kompakter Bauweise rein mechanisch realisiert werden. Vorteile ergeben sich dabei insbesondere bei der Miniaturisierung.

Bei der Ausführungsform nach Fig. 1 ist zwischen dem Antriebsarmteil 27 und der Abtastrolle 31 eine Rücklaufsperre 141 vorgesehen, die in Fig. 5 und 6 vergrößert dargestellt ist. Die Rücklaufsperre 141 wirkt zwischen dem Teilarm 27 und der Abtastrolle 31; sie besteht aus einem aus Kunststoff gespritzten, Z-förmiögen Sperrelement 145, das aus einem Befestigungszapfen 147, einem Sperrhaken 149 und einer diese Teile verbindenden federnden Brücke 151 besteht. Der Befestigungszapfen 147 ist unverlierbar in eine Schwalbenschwanz-Führung 153 des Teilarmes 27 eingesetzt. Der Sperrhaken 149 greift frei beweglich durch ein Loch 155 in dem Teilarm 27 hindurch. Die federnde Brücke 151 drückt den Sperrhaken 149 ständig gegen die Stirnfläche 157 der Abtastrolle 31.

Die Abtastrolle ist an der Stirnfläche 157 mit einer Vertiefung 159 versehen, die in der Soll-Drehrichtung in einer schrägen Ebene 163 frei auf der Stirnfläche 157 ausläuft und entgegen der Drehrichtung eine Blockiernase 161 aufweist.

Dreht der Nocken 21 die Abtastrolle 31 in der gewünschten Soll-Drehrichtung (Pfeil 195), dann wirkt die Rücklaufsperre 141 nicht. Dreht der Nocken 21 die Abtastrolle 31 aber entgegen der Soll-Drehrichtung (195), dann hakt der Sperrkhaken 149 an der Blockiernase 161, und die Abtastrolle 31 wird angehalten. Die Motordrehrichtung wird damit umgekehrt.

**Ansprüche**

1. Antriebsvorrichtung für ein Haushalts-Vibrationsgerät, wie Trockenrasier-oder Massageapparat, bei dem die Läuferwelle eines Einphasensynchronmotors ein Nockenabtastrollengetriebe antreibt, das die Motordrehbewegung in eine Vibrationsbewegung umwandelt, wobei der Rotor des Motors eine Hauptmagnetisierungsrichtung und der Stator eine Hauptfeldrichtung hat und die Längsachse des spiegelsymmetrischen Nockens unter einem Winkel zur Hauptmagnetisierungsrichtung des Rotors angebracht ist und wobei Nocken abtastende Abtastrollen an einem Antriebsende eines um einen Mittelbereich verkippbaren Schwenkarmes und ein zu bewegendes Vibrationsteil am Abtriebsende dieses Schwenkarmes angeordnet sind und die Abtastrollen in ständigem Kontakt auf der Kontur des Nockens abrollen, dadurch gekennzeichnet, daß am Ende des mit Spiel behafteten Übertragungsweges auf das Vibrationsteil (39) eine Ausgleichsfeder (38) einwirkt, die eine der Abtastrollen (31, 31a) gegen den Nocken (21) drückt, wobei die Position des Nockens (21) relativ zur Magnetisierungsrichtung des Rotors derart verdreht ist, daß der Rotor (17) bei Parallelstand von Rotormagnetisierungrichtung (22) und der Statorhauptfeldrichtung (16) mittels der Feder (38), vorzugsweise in positiver Richtung, aus dem Parallelstand herausgedrückt wird, wobei die positive Richtung diejenige ist, in welcher das vom Statorstrom auf den Rotor (17) ausgeübte Moment gleich Null wird, bevor das magnetische Klebemoment bei stromlosen Statorspulen (11, 11a) gleich Null ist und zu einer stabilen Ruhelage führt, und weiterhin das Vibrationsteil (39) sich bei diesem Parallelstand in der Nähe eines Umkehrpunktes befindet.

2. Antriebsvorrichtung nach Anspruch 1, dadurch gekennzeichnet, daß die Anpreßkraft der Ausgleichsfeder (38) so bemessen ist, daß sie gerade in der Lage ist, den Rotor (17) bei der durch das Schwingsystem verursachten Reibungsbelastung aus dem Parallelstand von Rotormagnetisierung (22) und Statorhauptfeldrichtung (16), vorzugsweise in positiver Richtung, zu verdrehen.

3. Antriebsvorrichtung nach Anspruch 1, dadurch gekennzeichnet, daß die Oberflächen (32) der Abtastrollen (31, 31a) elastisch àusgebildet sind.

4. Antriebsvorrichtung nach Anspruch 3, dadurch gekennzeichnet, daß die Rollenoberflächen (32) aus einem gummiartigen Material bestehen.

5. Antriebsvorrichtung nach den Ansprüchen 1 und 2, dadurch gekennzeichnet, daß der Übertragungsweg zwischen Vibrationsteil (39) und Nocken (21) eine Rücklaufsperre (141) aufweist und daß der Rotor (17) mittels dieser Rücklaufsperre (141) gezwungen wird, in der Richtung zu drehen, in der das günstigere Betriebsgeräusch und/oder weniger Vibrationen auftreten.

6. Antriebsvorrichtung nach Anspruch 5, dadurch gekennzeichnet, daß der Einphasensynchronmotor mit seinem Übertragungsweg zur Last so ausgebildet ist, daß das günstigere Betriebsgeräusch in der Drehrichtung auftritt, in welcher das vom Statorstrom auf den Rotor (17) ausgeübte Moment gleich Null wird, bevor das magnetische Klebemoment bei stromlosen Statorspulen (11, 11a) gleich Null ist und zu einer stabilen Ruhelage führt, und daß der Rotor (17) mittels einer Rücklaufsperre (141) gezwungen wird, in dieser positiven Richtung zu drehen.

7. Antriebsvorrichtung nach den Ansprüchen 1 und 5, dadurch gekennzeichnet , daß die Rücklaufsperre (141) aus einem federnden Z-förmigen Sperrelement (145) besteht, das gegen eine Stirnfläche (157) einer der Abtastrollen (31) drückt, wobei an der jeweiligen Abtastrolle (31) eine Blockiernase (161) vorgesehen ist, gegen die ein Sperrhaken (149) bei der unerwünschten Drehrichtung anschlägt.

8. Antriebsvorrichtung nach Anspruch 7, dadurch gekennzeichnet, daß das Sperrelement - (145) ein Kunststoffspritzteil ist, das an dem verkippbaren Schwenkarm (27) festgelegt ist, der die Abtastrolle (31) lagert, und daß das Kunststoffspritzteil zwischen der Festlegestelle (153) am Hebelarm (27) und dem gegen die Stirnfläche - (157) der Abtastrolle (31) gedrückten Sperrhaken - (149) als Z-förmige Kunststoffeder (151) ausgelegt ist, wobei der Sperrhaken (149) mit einer Vertiefung (159) in der Stirnfläche (157) der Abtastrolle - (31) zusammenwirkt.

9. Antriebsvorrichtung nach Anspruch 8, dadurch gekennzeichnet, daß die Vertiefung (159) so ausgebildet ist, daß der Sperrhaken (149) bei gewünschter Drehrichtung der Abtastrolle (31) aus der Vertiefung (159) entlang einer schiefen Ebene - (163) frei herausläuft und bei nicht gewünschter Drehrichtung auf die Blockiernase (161) aufläuft.

10. Antriebsvorrichtung nach Anspruch 1, dadurch gekennzeichnet, daß die Mittellinie (47a) des Motorstatorpaketes zusammenfällt mit der Mittellinie (47) des Abtriebsarmes des Schwenkarmes (25) bei Mittenstellung des Vibrationsteiles.

11. Antriebsvorrichtung nach Anspruch 1, 2 und 3, dadurch gekennzeichnet , daß die Abtastrollen (31, 31a) beidseitig symmetrisch zur Mittellinie (47) durch das Statorpaket (7) und den Schwenkarm (25) angeordnet sind.

12. Antriebsvorrichtung nach den Ansprüchen 1 und 11, dadurch gekennzeichnet, daß

-die von der ersten Rolle (31) dem Schwenkarm - (25) aufgezwungene Bewegung gegenüber der von der zweiten Rolle (31a) dem Schwenkarm (25) aufgezwungenen Bewegung räumlich um $\alpha_0$ = $360°/2n$ Verdrehungsgrade des Nockens (21, 321, 421) oder einem ungeraden Vielfachen davon versetzt von dem Nocken abgenommen wird, wobei n die Frequenzvervielfachung der schwingfrequenz von Rollen (31, 31a) und Vibrationsteil (39) gegenüber der Nockenumdrehungsfrequenz ist,

-die beim Abtasten dem Schwenkarm (25) von den Rollen (31, 31a) aufgezwungene Auslenkbewegung bei beiden Rollen (31, 31a) die gleiche Abhängigkeit vom Verdrehungswinkel $\alpha$ des Nockens (21, 321, 421) hat,

- die Dimensionierung des Nockens (21, 321, 421) derart gewählt ist, daß unter Berücksichtigung von Rollendurchmesser, Schwingungsamplitude, Schwingungsverlauf und dem mittleren Abstand (b) Nockenachse (19) -Rollenachse (29, 29a) die Rollen (31, 31a) eine vom Nockendrehwinkel $\alpha$

abhängige, periodische Auslenkung ($x_1$ bzw. $x_2$) erfahren, wobei die Grundfrequenz der Schwingbewegung n-fach so groß ist wie die Umdrehungsfrequenz des Nockens (21, 321, 421) und als Symmetriebedingung für die Auslenkung gilt:

$$x_1 = -x_2$$

mit $x_1 = f(\alpha)$,

$$x_2 = f(\alpha + \alpha_0)$$

$$\text{und} \quad \alpha_0 = \frac{360°}{2n} \cdot (2\mu + 1)$$
$$\mu = 0, 1, 2, \ldots$$

wobei n Werte von vorzugsweise 2, 4, 8 annimmt und $\alpha_0$ der Versatzwinkel der beiden Abtastrollen (31, 31a) ist.

13. Antriebsvorrichtung nach den Ansprüchen 1, 11 und 12, dadurch gekennzeichnet, daß

-beide Rollen (31, 31a) den gleichen Durchmesser aufweisen,

-bei Mittenstellung der Rollen (31, 31a) der Abstand der beiden Rollenachsen (29, 29a) von der Nockenachse (19) gleich groß ist,

-bei Mittenstellung der Rollen (31, 31a) die Verbindungslinien (43) der beiden Rollenachsen (29, 29a) zur Nockenachse (19) einen räumlichen Winkel von $\alpha_0 = 360°/2n$ oder ein ungerades Vielfaches $(2\mu + 1)$ davon miteinander bilden, wobei n die Frequenzvervielfachung ist.

14. Antriebsvorrichtung nach den Ansprüchen 1 und 11 bis 13, dadurch gekennzeichnet, daß bei einem Versatzwinkel von $\alpha_0 \neq 180°$ die Verbindungslinie (41) zwischen Schwenkmittelpunkt (45)

und Rollenmittelpunkt (29) und die Verbindungslinien (43) zwischen Rollenmittelpunkt (29) und Nockenachse (19) in Mittenstellung des Vibrationsteiles (39) senkrecht aufeinander stehen.

15. Antriebsvorrichtung nach den Ansprüchen 1 und 11 bis 14, dadurch gekennzeichnet, daß die Verbindung zwischen der Schwenkachse (23) und der Achse (29, 29a) einer der beiden oder beider Rollen (31, 31a) elastisch ausgebildet ist.

16. Antriebsvorrichtung nach einem oder mehreren der Ansprüchen 1 bis 15, dadurch gekennzeichnet, daß die Schwingebenen von Schwenkarm (25) und Rollen (31, 31a) zusammenfallen.

17. Antriebsvorrichtung nach den Ansprüchen 11 bis 16, dadurch gekennzeichnet, daß der Schwenkarm (25) auf der einen Seite der Schwenkachse (23) einen Antriebsarm (35) zum Zusammenwirken mit einem Vibrationsteil (39) und auf der anderen Seite der Schwenkachse (23) Abtriebsarme (27, 27a) aufweist, die gegenüber dem Abtriebsarm (35) verschwenkbar und aufeinander zu federnd verspannt sind.

FIG.1

FIG.5

FIG.6

0 212 719

1-IV- PHD 86-046

FIG.2a

FIG.2b

FIG.2c

FIG.3a

FIG.3b

FIG.3c

3 - IV - PHD 86-046

FIG.4a

FIG.4c

FIG.4b

FIG.4d